# EUROPÄISCHE PATENTANMELDUNG

(11) **EP 4 438 690 A1**
(43) Veröffentlichungstag der Anmeldung: **02.10.2024**
(21) Anmeldenummer: 23165863.4
(22) Anmeldetag: 31.03.2023
(51) Int. Cl.: C09J 7/22, C09J 5/02, A47B 96/20, B27D 5/00, B29C 63/00

(54) **VERFAHREN ZUR HERSTELLUNG VON KANTENLEISTEN UND KANTENLEISTE**

(71) Anmelder: Fritz Egger GmbH & Co. OG, 6380 St. Johann in Tirol (AT)
(72) Erfinder: Streichardt, Thomas, 48231 Warendorf (DE); Schwermer, Peter Florian, 57399 Kirchhundem (DE)
(74) Vertreter: Cohausz & Florack

(57) **Zusammenfassung**

Dargestellt und beschrieben wird ein Verfahren zur Herstellung einer Kantenleiste umfassend mindestens eine erste Schicht mit einer vorbehandelten, insbesondere aufgerauten, Verbindungsoberfläche, wobei das Verfahren die Schritte a) Bereitstellen einer ersten Schicht enthaltend einen Kunststoff und umfassend eine Oberfläche, b) Beaufschlagen der Oberfläche der ersten Schicht mit elektromagnetischer Strahlung, um eine vorbehandelte, insbesondere aufgeraute Verbindungsoberfläche zu erhalten, umfasst. Beschrieben sind ferner eine mit dem Verfahren erhältliche Kantenleiste, ein Möbelteil umfassend die Kantenleiste sowie die Verwendung der Kantenleiste zur Herstellung eines plattenförmigen Möbelteils.

## Beschreibung

Die vorliegende Erfindung betrifft ein Verfahren zur Herstellung einer Kantenleiste umfassend mindestens eine erste Schicht mit einer vorbehandelten Oberfläche. Die vorliegende Erfindung betrifft weiter eine mit dem erfindungsgemäßen Verfahren hergestellte Kantenleiste. Die vorliegende Erfindung betrifft weiter ein Möbelteil mit einer erfindungsgemäßen Kantenleiste. Die vorliegende Erfindung betrifft schließlich die Verwendung einer erfindungsgemäßen Kantenleiste zur Herstellung eines plattenförmigen Möbelteils.

Aus dem Stand der Technik ist es im Bereich der Möbelherstellung bekannt, plattenförmige Werkstoffe an der Schmalseite durch Anbringen einer Kantenleiste optisch ansprechender zu gestalten. Für das Aufbringen der Kantenleiste werden hauptsächlich zwei Wege verfolgt. Einerseits wird auf eine zumeist aus Kunststoff gefertigte Leiste unmittelbar vor dem Anbringen an eine Möbelplatte ein Schmelzkleber aufgetragen und die Kante durch Anpressen unmittelbar mit der Möbelplatte verklebt.

Andererseits gibt es auch Kantenleisten, die bereits eine Schicht umfassen, die für das Anbringen an der Möbelplatte durch Aktivieren, vor allem durch Aufschmelzen, in einen zähflüssigen Zustand gebracht wird und auf diesem Wege an der Möbelplatte befestigt, insbesondere verschweißt wird. Diese aktivierbare bzw. schmelzbare Schicht wird häufig als Schmelzschicht oder auch als Funktionsschicht bezeichnet. Die Funktionsschicht wird meist auf eine Kunststoffleiste aufgebracht. Dies kann im Wege der Extrusion, insbesondere der Coextrusion oder der Postcoextrusion geschehen.

Für eine gute Haftung der Kantenleiste an einer Möbelplatte muss der Schmelzkleber oder die Funktionsschicht gut an der Möbelplatte aber auch gut an der Kunststoffleiste haften. Dies war im Stand der Technik nicht immer ohne Weiteres möglich. Neben einzelnen, wie beispielsweise in der DE 10 2004 057 988 beschriebenen Haftvermittler-freien Ansätzen wurde die Kunststoffleiste häufig mit Haftvermittlern beschichtet, um genügend Adhäsion zwischen dem Haftmittel und der Kunststoffleiste zu gewährleisten. Das Haftmittel kann beispielsweise in Form eines Klebemittels wie eines Schmelzklebers oder einer Haftschicht wie einer Funktionsschicht ausgeführt sein.

Wird ein Haftvermittler eingesetzt, wird die Adhäsion zwischen Haftmittel und Haftvermittler primär meist durch die mechanische Verankerung des Haftmittels auf der Haftvermittleroberfläche bestimmt. Gängige Haftvermittlersysteme am Markt bestehen zu etwa 85 % aus Lösemitteln und zu etwa 15 % aus Bindemittel mit Kieselsäure versetzt. Darüber hinaus müssen Haftvermittlersystemen für PP - Kantenbänder Isocyanate für eine ausreichende Vernetzung hinzugefügt werden. Das aufgetragene Haftvermittlersystem wird oft auch als Primer bezeichnet. Diese Herangehensweise wird beispielsweise in der DE 10 2008 003 747 A1 beschrieben.

Zwar ist das Auftragen eines Haftvermittlers das im Stand der Technik üblicherweise eingesetzte Mittel, um die Adhäsion zu verbessern. Allerdings erfordert es einen zusätzlichen Arbeitsschritt, in dem zudem die Dosierung gesteuert werden muss. Da die Haftvermittlersysteme meistens isocyanathaltige Gruppen in einem Lösungsmittel enthalten, müssen besondere Vorkehrungen zum Arbeitnehmer- und Umweltschutz getroffen werden. Ferner ist eine zeitraubende Trocknung erforderlich und es sind kostenintensive Zusatzschritte notwendig, um das verdampfte Lösemittel kontrolliert einer Verbrennung oder einem Recycling zuzuführen. Weitere Nachteile dieser im Stand der Technik üblichen Vorgehensweise sind darin zu sehen, dass kostenintensive Walzenauftragswerke mit komplizierten Rakelsystemen nötig sind, um Totzonen und damit Ansammlungen von ausgehärtetem Haftvermittler im Auftragswerk auf ein Minimum zu reduzieren, dass der Beschichtungsprozess fehleranfällig ist, da eine homogene Vermischung mit einem Vernetzer erreicht werden muss, dass ein homogener Haftvermittlerauftrag über die Breite und Länge der Kantenleiste erzielt werden muss, sowie dass die Dickentoleranz nur gering ist und dabei störende Agglomerate entstehen können, die übertragen werden. Ferner ist nicht vollständig getrockneter Haftvermittler empfindlich gegenüber mechanischen Beschädigungen sowie Schubspannung. Auch muss großer Aufwand innerhalb der Qualitätssicherung betrieben werden.

Alternativ zur Auftragung eines Lösungsmittel-basierten Haftvermittlers ist in der EP2746355A1 vorgeschlagen worden, den Haftvermittler als eine mittels Flammsilikatisierung erzeugte Beschichtung aufzutragen. Dies ist jedoch auch aufwändig, da die Flammsilikatisierung exakt gesteuert werden muss und spezielle Brenner vorgehalten werden müssen. Außerdem müssen Silane als Ausgangsverbindungen eingesetzt werden, die zusätzliche Arbeitsschutzvorkehrungen erfordern können.

Eine Vereinfachung der Kantenleisten sowie ihrer Herstellung, insbesondere hinsichtlich des Haftvermittlersystems, wäre wünschenswert. Nach dem Anbringen einer Kantenleiste an eine Platte wäre insbesondere auch eine gute Festigkeit des Gesamtverbundsystems zwischen Platte und Kante ebenfalls wünschenswert.

Vor diesem Hintergrund liegt der vorliegenden Erfindung die Aufgabe zu Grunde, eine Kantenleiste bereit zu stellen, die die vorgenannten Probleme zumindest teilweise überwindet und insbesondere eine auch hinsichtlich ihres Herstellungsverfahrens vereinfachte Kantenleiste darstellt.

Die zuvor genannte Aufgabe wird erfindungsgemäß gelöst durch das Verfahren gemäß Anspruch 1, die Kantenleiste nach Anspruch 16, das Möbelteil nach Anspruch 17 sowie die Verwendung einer Kantenleiste nach Anspruch 18.

Dementsprechend stellt die Erfindung ein Verfahren bereit zur Herstellung einer Kantenleiste umfassend mindestens eine erste Schicht mit einer vorbehandelten, insbesondere aufgerauten, Verbindungsoberfläche, wobei das Verfahren die folgenden Schritte umfasst
a) Bereitstellen einer ersten Schicht enthaltend einen Kunststoff und umfassend eine Oberfläche,
b) Beaufschlagen der Oberfläche der ersten Schicht mit elektromagnetischer Strahlung, um eine vorbehandelte, insbesondere aufgeraute Verbindungsoberfläche zu erhalten.

Die zuvor genannte Aufgabe wird ferner durch eine nach dem erfindungsgemäßen Verfahren erhältliche Kantenleiste gelöst.

Die zuvor genannte Aufgabe wird erfindungsgemäß weiterhin gelöst durch ein Möbelteil umfassend eine erfindungsgemäße Kantenleiste.

Die zuvor genannte Aufgabe wird schließlich durch die Verwendung einer erfindungsgemäßen Kantenleiste zur Herstellung eines plattenförmigen Möbelteils gelöst.

Überraschenderweise ist gefunden worden, dass durch das Beaufschlagen der Oberfläche der ersten Schicht mit elektromagnetischer Strahlung die Oberfläche so vorbehandelt, insbesondere aufgeraut, werden konnte, dass die Verwendung eines Haftvermittlers oder Primers für eine feste Verbindung von Haftmittel, Kantenleiste und Werkstück nicht mehr nötig ist. Durch den Verzicht auf einen Haftvermittler wird die Kantenleiste und insbesondere das Verfahren für ihre Herstellung vereinfacht. Ferner wird durch die Vorbehandlung der Oberfläche eine gute Festigkeit eines Haftmittels an der Kantenleiste sowie der Kantenleiste über das Haftmittel an einer Platte erzielt.

Eine Kantenleiste kann zum Beispiel ein Strangprofil sein, das zur Verbesserung der Ästhetik eines Möbelstücks vorgesehen ist.

Im erfindungsgemäßen Verfahren wird eine Oberfläche der ersten Schicht der Kantenleiste vorbehandelt, um eine Verbindungsoberfläche zu erhalten. Die Verbindungsoberfläche der Kantenleiste ist dabei diejenige Oberfläche, über die die Kantenleiste mit einem Werkstück wie einer Platte oder einem Möbelstück verbunden wird. Die Verbindung kann beispielsweise durch Auftrag eines Schmelzklebers oder einer Funktionsschicht auf die Verbindungsoberfläche gegebenenfalls unter Aktivierung erzielt werden.

Durch das Beaufschlagen der Oberfläche mit elektromagnetischer Strahlung wird die Oberfläche insbesondere dafür vorbereitet, gute Verbindungsmöglichkeiten für ein Haftmittel wie einen Schmelzkleber oder eine Funktionsschicht aufzuweisen. Insbesondere wird die Oberfläche durch das Beaufschlagen mit elektromagnetischer Strahlung aufgeraut. Im Zuge des Vorbehandelns, insbesondere des Aufrauens, vergrößert sich insbesondere die Oberfläche. Somit kann eine verbesserte Verbindung zu einem Haftmittel durch eine größere Kontaktfläche erzielt werden. Ferner können im Zuge des Vorbehandelns, insbesondere des Aufrauens, Vertiefungen, insbesondere oberflächennahe Hinterschneidungen und/oder Poren erzeugt werden, in die ein Haftmittel eingreifen kann. Durch das Eingreifen in diese Vertiefungen, Hinterschneidungen und/oder Poren kann ebenfalls eine verbesserte Verbindung zu einem Haftmittel erzielt werden. Somit kann also, ohne einen Haftvermittler zu verwenden, eine gute Verbindung eines Haftmittels mit der Kantenleiste erzielt werden, so dass die Kantenleiste fest an einem Werkstück angebracht werden kann.

Die Rauheit der Oberfläche kann beispielsweise nach DIN EN ISO 4287, insbesondere DIN EN ISO 4287:2010-07 bestimmt werden. Die Verbindungsoberfläche kann insbesondere einen Mittenrauwert Rₐ von 1 µm bis 100 µm, vorzugsweise von 2 µm bis 50 µm, weiter bevorzugt von 3 µm bis 20 µm aufweisen.

Die erste Schicht enthält erfindungsgemäß einen Kunststoff. Vorzugsweise ist der Kunststoff ein Thermoplast und/oder ein thermoplastisches Elastomer. Hierbei können Thermoplaste, auch Plastomere genannt, insbesondere Kunststoffe sein, die sich in einem bestimmten Temperaturbereich verformen lassen. Dieser Vorgang ist reversibel, das heißt, er kann durch Abkühlung und Wiedererwärmung bis in den schmelzflüssigen Zustand beliebig oft wiederholt werden, solange nicht durch Überhitzung die sogenannte thermische Zersetzung des Materials einsetzt. Darin unterscheiden sich Thermoplaste von den Duroplasten und Elastomeren. Ein weiteres Alleinstellungsmerkmal ist die Schweißbarkeit von Thermoplasten.

Unter einem thermoplastischen Elastomer soll ein Werkstoff verstanden werden, welcher bei Zufuhr von Wärme thermoplastisch und somit fließfähig wird. Dabei kann der Werkstoff bei der üblichen Umgebungstemperatur, insbesondere bei Raumtemperatur, elastisch sein. Insbesondere entstehen die elastischen Eigenschaften des thermoplastischen Elastomers durch das gleichzeitige Vorhandensein physikalischer kristalliner oder teilkristalliner und elastischer Bereiche in der Materialmasse bei der Arbeitstemperatur. Thermoplastische Elastomere sind zum Beispiel Block-Copolymere, wozu thermoplastische Styrolelastomere (TPS), thermoplastische Urethanelastomere (TPU), thermoplastische Polyamidelastomere (TPA), thermoplastische Copolyesterelastomere (TPC) zählen. Auch Elastomerlegierungen (sogenannte "Blends") wie thermoplastische Olefinelastomere (TPO) und thermoplastische Kautschukvulkanisate (TPV) gehören zu den thermoplastischen Elastomeren.

In den Zeichnungen zeigen
Fig. 1 ein erfindungsgemäßes Herstellungsverfahren der erfindungsgemäßen Kantenleiste,
Fig. 2 ein weiteres erfindungsgemäßes Herstellungsverfahren der erfindungsgemäßen Kantenleiste mit einer Stabilitätsschicht.

Im Folgenden werden verschiedene Ausführungsformen des Verfahrens, der Kantenleiste, des Möbelteils und der Verwendung beschrieben, wobei die einzelnen Ausführungsformen jeweils unabhängig voneinander für das Verfahren, die Kantenleiste, das Möbelteil und die Verwendung gelten. Darüber hinaus können die einzelnen Ausführungsformen beliebig miteinander kombiniert werden.

Erfindungsgemäß enthält die erste Schicht einen Kunststoff. Verschiedene Kunststoffe können in der ersten Schicht enthalten sein. Vorzugsweise ist der Kunststoff ein Thermoplast und/oder ein thermoplastisches Elastomer. Zweckmäßigerweise wird der Kunststoff entsprechend der gewünschten Eigenschaften der Kantenleiste und/oder der zu erzeugenden Verbindungsoberfläche gewählt.

Bei einer Ausführungsform des Verfahrens nach Anspruch 1 ist der Kunststoff der ersten Schicht ausgewählt aus der Gruppe bestehend aus Polyethylen, Polypropylen, Acrylnitril-Butadien-Styrol-Copolymerisat, Polyvinylchlorid, Polymethylmethacrylat, Polyethylenterephthalat, thermoplastische Styrolelastomere (TPS), thermoplastische Urethanelastomere (TPU), thermoplastische Polyamidelastomere (TPA), thermoplastische Copolyesterelastomere (TPC), thermoplastische Olefinelastomere (TPO), thermoplastische Kautschukvulkanisate (TPV), und Mischungen davon. Weiter bevorzugt ist der Kunststoff ausgewählt aus der Gruppe bestehend aus Polyethylen, Polypropylen, Acrylnitril-Butadien-Styrol-Copolymerisat, Polyvinylchlorid, Polymethylmethacrylat, Polyethylenterephthalat und Mischungen davon. Besonders bevorzugt ist der Kunststoff Polypropylen und/oder Acrylnitril-Butadien-Styrol-Copolymerisat.

Die erste Schicht enthält vorzugsweise 20 bis 95 Gew.-%, bevorzugt 30 bis 80 Gew.-%, besonders bevorzugt 40 bis 60 Gew.-% des Kunststoffs, bezogen auf das Gesamtgewicht der ersten Schicht. Dies ist insbesondere der Fall, wenn die Kantenleiste einen hohen Füllstoffgehalt aufweist.

Bei einer Ausführungsform des Verfahrens weist die Oberfläche der ersten Schicht Bereiche auf, die jeweils ein unterschiedliches Absorptionsverhalten oder ein unterschiedliches Verhalten nach Beaufschlagung mit elektromagnetischer Strahlung aufweisen. Auf diese Weise kann beispielsweise eine vorbehandelte, insbesondere aufgeraute Verbindungsoberfläche erzeugt werden.

Bereiche mit unterschiedlichem Absorptionsverhalten können auf verschiedene Art und Weise erzielt werden. Die unterschiedlichen Bereiche können durch Unterschiede im selben Material und/oder durch den Einsatz unterschiedlicher Materialien erzielt werden. So kann das unterschiedliche Verhalten erreicht werden, indem der Kunststoff nicht in allen Bereichen homogen ist, sondern beispielsweise einige der Bereiche des Kunststoffs kristallin sind und andere amorph wie zum Beispiel bei Polyethylen. Ferner können bei Acrylnitril-Butadien-Styrol-Copolymerisat als Kunststoff Acrylnitril-Teile ein anderes Absorptionsverhalten zeigen als Butadien-Teile. Ferner kann die Schicht neben dem Kunststoff weitere Stoffe wie beispielsweise Füllstoffe enthalten, die bei Beaufschlagung mit elektromagnetischer Strahlung ein unterschiedliches Absorptionsverhalten aufweisen. Eine vorbehandelte, insbesondere aufgeraute, Verbindungsoberfläche kann beispielsweise erzielt werden, indem diese verschiedenen Bereiche nach Beaufschlagen mit elektromagnetischer Energie unterschiedlich stark schrumpfen, beispielsweise da sie die elektromagnetische Energie unterschiedlich stark absorbiert haben.

Alternativ können durch die Beaufschlagung mit elektromagnetischer Strahlung auch Vertiefungen, Hinterschneidungen und/oder Poren in der Oberfläche erzeugt werden, wodurch die vorbehandelte Verbindungsoberfläche erhalten wird. Aus der Oberfläche können dabei zum Beispiel Teile durch Ablation entfernt werden oder manche Bereiche schmelzen während andere Bereiche fest bleiben, wodurch die vorbehandelte, insbesondere aufgeraute Oberfläche entsteht.

Schließlich ist es auch denkbar, dass mit der elektromagnetischen Strahlung Muster, beispielsweise Punkte oder Linien, auf der Oberfläche erzeugt werden können. Die Muster können für die jeweilige Anwendung angepasst werden.

Die vorbehandelte, insbesondere aufgeraute, Verbindungsoberfläche kann Vertiefungen, Hinterschneidungen und/oder Poren aufweisen. Die vorbehandelte, insbesondere aufgeraute, Verbindungsoberfläche kann eine Topographie mit Strukturen wie Vertiefungen, Hinterschneidungen und/oder Poren mit einer Größe aufweisen, die der Größe der Bereiche entspricht. Insbesondere kann eine laterale Strukturauflösung von 0,1 µm bis 20 µm erreicht werden. Vertiefungen, Hinterschneidungen und/oder Poren können eine Tiefe von 0,1 µm bis 100 µm, vorzugsweise von 1 µm bis 50 µm aufweisen.

Bei einer Ausführungsform des Verfahrens ist der Kunststoff der ersten Schicht in Bezug auf seine Schmelzviskosität ausgewählt worden. Auf diese Weise kann das Verhalten des Kunststoffs beim Beaufschlagen mit der elektromagnetischen Strahlung berücksichtigt und eine optimale Materialverdrängung erzielt werden.

Gemäß einer Ausführungsform des Verfahrens enthält die erste Schicht Füllstoffpartikel. Die Füllstoffpartikel können in der ersten Schicht insbesondere oberflächennah sein.

Die erste Schicht kann insbesondere 5 bis 80 Gew.-%, bevorzugt 20 bis 70 Gew.-%, besonders bevorzugt 40 bis 60 Gew.-% Füllstoffe enthalten, bezogen auf das Gesamtgewicht der ersten Schicht.

Als Füllstoffpartikel kommen verschiedene Partikel in Frage. Zweckmäßigerweise sind die Füllstoffpartikel ausgewählt aus der Gruppe bestehend aus Kieselsäure, Talkum, Glimmer, Kaolin, Kieselerde, Kreide, Dolomit, Baryt, Quarzmehl, Aluminiumhydroxid, Magnesiumhydroxid, Glasfaser, Glaskugeln, Gesteinsmehl und Mischungen davon.

Gemäß einer Ausführungsform des Verfahrens wird durch das Beaufschlagen der Oberfläche der ersten Schicht mit elektromagnetischer Strahlung zumindest ein Teil der Füllstoffpartikel teilweise freigelegt.

Insbesondere können auf diese Weise oberflächennahe Füllstoffpartikel teilweise freigelegt werden. Durch das teilweise Freilegen kann die vorbehandelte, insbesondere aufgeraute, Verbindungsoberfläche erzeugt werden. Insbesondere können durch das teilweise Freilegen von Füllstoffpartikeln Hinterschneidungen erzeugt werden. Die Hinterschneidungen erlauben eine feste Verbindung eines Haftmittels mit der Kantenleiste. Das Freilegen der Füllstoffpartikel erfolgt insbesondere durch das Abtragen von Kunststoff von der Oberfläche.

Die Kantenleiste kann verschieden aufgebaut sein. Die Kantenleiste kann aus der ersten Schicht bestehen. Die Kantenleiste kann alternativ weitere Schichten umfassen. Die Schichten können unterschiedliche Materialzusammensetzungen aufweisen. Die Schichten können die gleiche Materialzusammensetzung aufweisen. Die Kantenleiste kann eine Sandwichstruktur aufweisen, in der die Schichten angeordnet sind. Beispiele für weitere Schichten sind eine Dekorschicht, eine Lackschicht wie eine Strukturlackschicht, sowie eine Stabilitätsschicht, die der Kantenleiste mechanische Stabilität verleiht. Gemäß einer Ausführungsform des Verfahrens weist die Kantenleiste eine weitere Schicht auf, vorzugsweise eine Stabilitätsschicht.

Gemäß einer Ausführungsform des Verfahrens umfasst die Kantenleiste mindestens eine weitere Schicht, die ein von dem Kunststoff der ersten Schicht verschiedenes Material enthält oder daraus besteht. Die weitere Schicht kann beispielsweise einen anderen Kunststoff enthalten oder daraus bestehen. Für den Kunststoff gilt vorzugsweise das hierin Gesagte entsprechend. Die weitere Schicht kann auch Papier, Metall, Keramik, Holz oder Glas enthalten oder daraus bestehen. Auf diese Weise kann die Kantenleiste auf unterschiedliche Art gestaltet werden. Ferner können so die mechanischen Eigenschaften der Kantenleiste eingestellt werden.

Die Kantenleiste kann zusätzlich zur ersten Schicht eine Stabilitätsschicht aufweisen. An der Stabilitätsschicht kann darüber hinaus eine weitere Schicht, beispielsweise eine Dekorschicht, angebracht sein. Die Schichtfolge kann beispielsweise Dekorschicht-Stabilitätsschicht-erste Schicht sein.

Umfasst die Kantenleiste mehrere Schichten können diese zu unterschiedlichen Zeitpunkten im erfindungsgemäßen Verfahren miteinander verbunden werden. So kann eine Stabilitätsschicht, beispielsweise ein extrudiertes Kunststoffband, bereitgestellt werden, auf das die erste Schicht in einem Schritt vor Schritt a) aufgebracht wird. In einem weiteren Schritt nach Schritt b) kann dann auf die Stabilitätsschicht eine weitere Schicht wie eine Dekorschicht aufgebracht werden.

Gemäß einer Ausführungsform des Verfahrens umfasst die Kantenleiste mindestens eine weitere Schicht, insbesondere eine Stabilitätsschicht, auf die die erste Schicht aufgebracht wird, vorzugsweise in einem Schritt vor Schritt a). Vorzugsweise enthält die erste Schicht gemäß dieser Ausführungsform Füllstoffpartikel.

Der Einsatz mehrerer Schichten und der zeitliche Ablauf beim Aufbringen erhöht die Flexibilität bei der Gestaltung der Kantenleiste.

Die Kantenleiste sowie die von ihr umfassten Schichten können auf unterschiedliche Art und Weise hergestellt werden. Dabei können auch unterschiedliche Herstellungsarten kombiniert werden. So kann die Kantenleiste und/oder einzelne Schichten der Kantenleiste durch Spritzguss, Beschichten, Extrusion, Co-Extrusion, Post-Coextrusion und/oder Laminieren hergestellt werden.

Unter Co-Extrusion wird die gleichzeitige Extrusion von mindestens zwei Polymermaterialien durch eine einzige Düse verstanden. Hieraus ergibt sich ein einzelnes extrudiertes Produkt mit mehreren Schichten, die unterschiedliche Zusammensetzungen aufweisen, und die miteinander verbunden sind. Bei einer Post-Co-Extrusion können die mindestens zwei Polymermaterialien zeitlich verzögert zusammengeführt werden, um das Substrat zu bilden. So kann beispielsweise zunächst eine weitere Schicht durch einen ersten Extruder erzeugt werden, und dann mittels eines dem ersten Extruder nachgeschalteten, weiteren Extruders, die erste Schicht auf die weitere Schicht appliziert werden.

Das Aufbringen der ersten Schicht auf eine weitere Schicht, insbesondere eine Stabilitätsschicht, kann durch die oben angeführten Herstellungsarten erreicht werden.

Beispielsweise kann eine Stabilitätsschicht, vorzugsweise aus Kunststoff, durch Extrusion hergestellt werden, auf die mittels Post-Coextrusion die erste Schicht aufgebracht wird. Anschließend kann eine Dekorschicht, beispielsweise eine Folie, auf die Stabilitätsschicht laminiert werden, um eine Kantenleiste mit der Schichtfolge Dekorschicht-Stabilitätsschicht-erste Schicht zu erhalten. Die erste Schicht kann aber auch mit einer Stabilitätsschicht co-extrudiert werden. Eine Dekorschicht kann gleichzeitig ebenfalls co-extrudiert werden oder später durch Laminieren oder Post-Coextrusion auf die Stabilitätsschicht aufgebracht werden. Ebenso kann ein Dekor auf die Kantenleiste aufgedruckt werden. Ferner kann auch eine weitere Schicht, wie eine Stabilitätsschicht, durch Spritzguss erhalten werden, auf die mittels Post-Coextrusion dann die erste Schicht aufgebracht wird.

Bei einer Ausführungsform des Verfahrens wird die Kantenleiste und/oder die Stabilitätsschicht durch Extrusion hergestellt. Dies erlaubt eine wirtschaftliche Herstellung der Kantenleisten.

Wird die erste Schicht auf eine weitere Schicht, insbesondere eine Stabilitätsschicht, aufgebracht, kann die weitere Schicht in einem vorgelagerten Schritt einer Vorbehandlung unterworfen werden. Beispiele für Vorbehandlungen sind Oberflächenbehandlungen wie Corona-Behandlung oder Plasmabehandlung. Dies kann die Verbindung der ersten Schicht mit der weiteren Schicht verbessern.

Gemäß einer Ausführungsform des Verfahrens wird in einem weiteren Schritt nach Schritt b) auf die Verbindungsoberfläche ein Haftmittel aufgebracht. Als Haftmittel wird vorzugsweise eine Schmelzkleber oder eine Funktionsschicht aufgebracht.

Ein Schmelzkleber wird vorzugsweise unmittelbar vor dem Anbringen der Kantenleiste an ein Werkstück aufgebracht. Eine Funktionsschicht wird vorzugsweise bei der Herstellung der Kantenleiste aufgebracht. Eine Funktionsschicht kann durch Beschichten, Extrusion, Co-Extrusion, Post-Coextrusion und/oder Laminieren auf die Verbindungsoberfläche aufgebracht werden. Vorzugsweise wird die Funktionsschicht durch Post-Coextrusion oder durch Beschichten aufgebracht.

Dadurch, dass die Verbindungsoberfläche vorbehandelt, insbesondere aufgeraut ist, haftet der Schmelzkleber oder die Funktionsschicht gut an der Kantenleiste. Dies wird beispielsweise durch die Vertiefungen, Hinterschneidungen und/oder Poren ermöglicht.

Als Schmelzkleber kommen verschiedene Schmelzkleber in Betracht. Gemäß einer Ausführungsform des Verfahrens ist der Schmelzkleber ein Schmelzkleber auf Basis eines Polyamids, eines Polyethylens, eines amorphen Polyalphaolefins, eines Polyesterelastomers, eines thermoplastischen Polyurethans (TPU), eines reaktiven Polyurethans, eines Ethylenvinylacetat-Copolymers, oder eines Copolyamidelastomers.

Weitere Beispiele für Schmelzklebstoffe sind in der DE 199 21 134 A1 beschrieben.

Eine Funktionsschicht kann auf unterschiedliche Art und Weise realisiert werden. Gemäß einer Ausführungsform des Verfahrens enthält die Funktionsschicht ein thermoplastisches Polymer, ein thermoplastisches Elastomer oder Mischungen davon. Vorzugsweise ist das thermoplastische Polymer, das thermoplastische Elastomer oder die Mischungen davon ausgewählt aus der Gruppe, die aus Acrylnitril-Butadien-Styrol-Copolymerisat, Polyvinylchlorid, Polymethylmethacrylat, Polyethylenterephthalat, thermoplastisches Polyurethan (TPU), Polypropylen und Polyethylen besteht. Beispiele für Funktionsschichten sind in EP3950868, EP4122676, EP2180995, EP3086911 oder EP1852242 beschrieben.

Die Kantenleiste weist vorzugsweise eine Breite von 5 bis 120 mm, bevorzugt 5 bis 80 mm, weiter bevorzugt 5 bis 40 mm, noch weiter bevorzugt 10 bis 25 mm, besonders bevorzugt 18 bis 25 mm auf. Ferner weist die Kantenleiste vorzugsweise eine Dicke von 0,15 bis 15 mm, bevorzugt 0,15 bis 10 mm, besonders bevorzugt 0,4 bis 5 mm auf.

Verschiedene Formen elektromagnetischer Strahlung kommen in Frage. Beispielsweise kann Laserstrahlung, Terahertz-Strahlung oder Mikrowellenstrahlung eingesetzt werden. Gemäß einer Ausführungsform des Verfahrens ist die elektromagnetische Strahlung eine Laserstrahlung. Laserstrahlung ist sehr flexibel, da sie sich sowohl in der Energie als auch in der Wellenlänge als auch in der Dauer der Strahlung, insbesondere kontinuierlich oder gepulst, gut variieren lässt. Ferner lässt sich Laserstrahlung gut fokussieren. Der Laser weist vorzugsweise eine Wellenlänge im Bereich von 200 nm bis 1200 nm auf. Vorzugsweise wird die Oberfläche im erfindungsgemäßen Verfahren mit Laserstrahlung beaufschlagt.

Weitere Merkmale und Vorteile des Herstellungsverfahrens, der Kantenleiste, des Möbelteils und der Verwendung ergeben sich aus der nachfolgenden Beschreibung von Ausführungsbeispielen, wobei auf die beigefügten Figuren Bezug genommen wird.

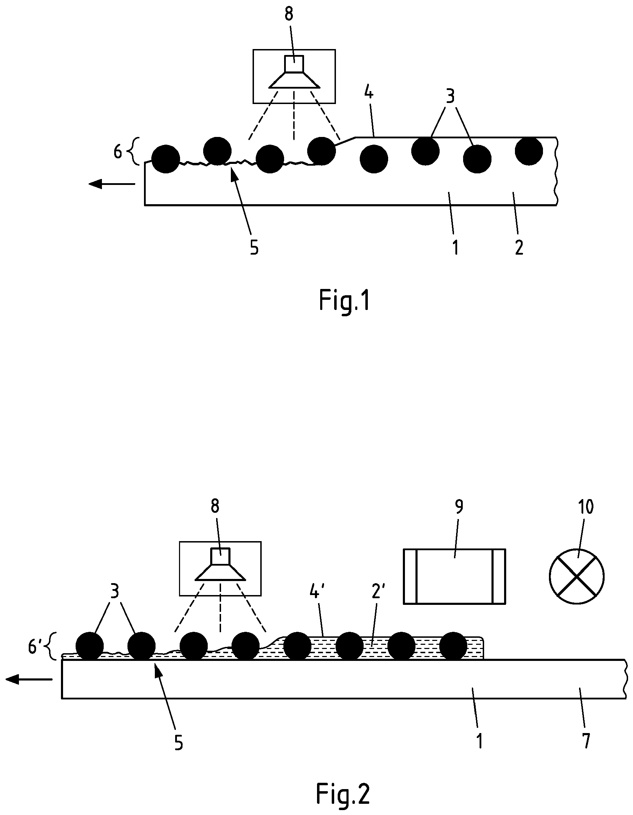

Fig. 1 zeigt ein erstes Ausführungsbeispiel des erfindungsgemäßen Herstellungsverfahrens. Dabei wird eine Kantenleiste 1, die aus der ersten Schicht 2 besteht, bearbeitet. Die erste Schicht 2 enthält Polypropylen und Füllstoffpartikel 3. Alternativ zu Polypropylen kann insbesondere Acrylnitril-Butadien-Styrol-Copolymerisat oder Polymethylmethacrylat als Kunststoff für die erste Schicht 2 verwendet werden. Als Füllstoffpartikel 3 wurde im vorliegenden Beispiel Kieselsäure eingesetzt. Zumindest einige der Füllstoffpartikel 3 sind nahe an der Oberfläche 4.

Die Kantenleiste 1 wird im Herstellungsverfahren von Fig. 1 von rechts nach links geführt. Dabei wird die Oberfläche 4 unter der elektromagnetischen Strahlungsquelle 8 entlang geführt. Im Ausführungsbeispiel von Fig. 1 ist die elektromagnetische Strahlungsquelle 8 ein gepulster Laser. Durch das Beaufschlagen der Oberfläche 4 mit Laserstrahlung wird die Oberfläche 4 aufgeraut. Insbesondere werden Hinterschneidungen 5 erzeugt, die sich in Fig. 1 vor allem im näheren Umfeld der Füllstoffpartikel 3 befinden. Dabei werden Teile des Kunststoffs der ersten Schicht 2 durch die Laserstrahlung ablatiert. Auf diese Weise werden einige der Füllstoffpartikel 5 teilweise freigelegt. Ferner wird eine Kantenleiste 1 mit einer aufgerauten Verbindungsoberfläche 6 erhalten.

Fig. 2 zeigt ein zweites Ausführungsbeispiel des erfindungsgemäßen Herstellungsverfahrens. Dabei wird eine Kantenleiste 1, die eine Stabilitätsschicht 7 umfasst, bearbeitet. Die Stabilitätsschicht 7 ist dabei aus Acrylnitril-Butadien-Styrol-Copolymerisat extrudiert worden (nicht gezeigt), alternativ sind auch beispielsweise Polyvinylchlorid, Polyethylen oder Polypropylen als Material möglich.

Die Kantenleiste 1 wird im Herstellungsverfahren von Fig. 2 ebenfalls von rechts nach links geführt.

In einem vorgelagerten Schritt kann die Stabilitätsschicht 7 einer Koronabehandlung mit Hilfe der Koronavorrichtung 10 unterworfen werden. Mit Hilfe der Koronabehandlung kann eine verbesserte Haftung weiterer Schichten auf der Stabilitätsschicht 7 erzielt werden.

Auf die Stabilitätsschicht 7, die vorzugsweise einer Koronabehandlung unterworfen wurde, wird in einem weiteren vorgelagerten Schritt mit Hilfe des Auftragswerks 9 eine Zusammensetzung enthaltend Füllstoffpartikel 3 sowie einen Kunststoff als erste Schicht 2' aufgetragen. Als Kunststoff wird derselbe Kunststoff eingesetzt, der für die Stabilitätsschicht 7 verwendet wird. Vorzugsweise erhärtet die erste Schicht 2' vor weiteren Verfahrensschritten. Die erste Schicht 2' weist die Oberfläche 4' auf.

In einem weiteren Verfahrensschritt wird die Oberfläche 4' der Kantenleiste 1 unter der elektromagnetischen Strahlungsquelle 8 entlang geführt, die auch im Ausführungsbeispiel von Fig. 2 ein gepulster Laser ist. Durch das Beaufschlagen der Oberfläche 4' mit Laserstrahlung wird die Oberfläche 4' aufgeraut. Insbesondere werden Hinterschneidungen 5 erzeugt, die sich in Fig. 2 vor allem im näheren Umfeld der Füllstoffpartikel 3 befinden. Dabei werden Teile des Kunststoffs der ersten Schicht 2' durch die Laserstrahlung ablatiert. Auf diese Weise werden einige der Füllstoffpartikel 5 teilweise freigelegt. Ferner wird eine Kantenleiste 1 mit einer aufgerauten Verbindungsoberfläche 6' erhalten.

Die Kantenleisten 1 mit den Verbindungsoberflächen 6 und 6' können mit einer Funktionsschicht oder einem Schmelzkleber versehen werden. Über die Funktionsschicht oder den Schmelzkleber können die Kantenleisten 1 an einem Werkstück befestigt werden, wobei eine feste Verbindung erhalten wird.

### Bezugszeichenliste

- 1: Kantenleiste
- 2: erste Schicht
- 2': erste Schicht
- 3: Füllstoffpartikel
- 4: Oberfläche
- 4': Oberfläche
- 5: Hinterschneidungen
- 6: aufgeraute Verbindungsoberfläche
- 6': aufgeraute Verbindungsoberfläche
- 7: Stabilitätsschicht
- 8: Elektromagnetische Strahlungsquelle
- 9: Auftragswerk
- 10: Koronavorrichtung

## Patentansprüche

1. Verfahren zur Herstellung einer Kantenleiste umfassend mindestens eine erste Schicht mit einer vorbehandelten, insbesondere aufgerauten, Verbindungsoberfläche, **dadurch gekennzeichnet, dass** das Verfahren die folgenden Schritte umfasst
a) Bereitstellen einer ersten Schicht enthaltend einen Kunststoff und umfassend eine Oberfläche,
b) Beaufschlagen der Oberfläche der ersten Schicht mit elektromagnetischer Strahlung, um eine vorbehandelte, insbesondere aufgeraute Verbindungsoberfläche zu erhalten.

2. Verfahren nach Anspruch 1, **dadurch gekennzeichnet, dass** der Kunststoff der ersten Schicht ausgewählt ist aus der Gruppe bestehend aus Polyethylen, Polypropylen, Acrylnitril-Butadien-Styrol-Copolymerisat, Polyvinylchlorid, Polymethylmethacrylat, Polyethylenterephthalat, thermoplastische Styrolelastomere (TPS), thermoplastische Urethanelastomere (TPU), thermoplastische Polyamidelastomere (TPA), thermoplastische Copolyesterelastomere (TPC), thermoplastische Olefinelastomere (TPO), thermoplastische Kautschukvulkanisate (TPV), und Mischungen davon, insbesondere Polypropylen und/oder Acrylnitril-Butadien-Styrol-Copolymerisat.

3. Verfahren nach einem der Ansprüche 1 oder 2, **dadurch gekennzeichnet, dass** die Oberfläche der ersten Schicht Bereiche aufweist, die jeweils ein unterschiedliches Absorptionsverhalten oder ein unterschiedliches Verhalten nach Beaufschlagung mit elektromagnetischer Strahlung aufweisen.

4. Verfahren nach einem der vorangehenden Ansprüche, **dadurch gekennzeichnet, dass** die erste Schicht Füllstoffpartikel enthält.

5. Verfahren nach Anspruch 4, **dadurch gekennzeichnet, dass** die Füllstoffpartikel ausgewählt sind aus der Gruppe bestehend aus Kieselsäure, Talkum, Glimmer, Kaolin, Kieselerde, Kreide, Dolomit, Baryt, Quarzmehl, Aluminiumhydroxid, Magnesiumhydroxid, Glasfaser, Glaskugeln, Gesteinsmehl und Mischungen davon.

6. Verfahren nach einem der Ansprüche 4 oder 5, **dadurch gekennzeichnet, dass** durch das Beaufschlagen der Oberfläche der ersten Schicht mit elektromagnetischer Strahlung zumindest ein Teil der Füllstoffpartikel teilweise freigelegt wird.

7. Verfahren nach einem der vorangehenden Ansprüche, **dadurch gekennzeichnet, dass** die Kantenleiste aus der ersten Schicht besteht oder dass die Kantenleiste weitere Schichten, insbesondere eine Stabilitätsschicht, umfasst.

8. Verfahren nach einem der vorangehenden Ansprüche, **dadurch gekennzeichnet, dass** die Kantenleiste mindestens eine weitere Schicht umfasst, die ein von dem Kunststoff der ersten Schicht verschiedenes Material enthält oder daraus besteht.

9. Verfahren nach einem der vorangehenden Ansprüche, **dadurch gekennzeichnet, dass** die Kantenleiste mindestens eine weitere Schicht, insbesondere eine Stabilitätsschicht, umfasst, auf die die erste Schicht aufgebracht wird, vorzugsweise in einem Schritt vor Schritt a).

10. Verfahren nach einem der vorangehenden Ansprüche, **dadurch gekennzeichnet, dass** die Kantenleiste und/oder die Stabilitätsschicht durch Extrusion hergestellt wird.

11. Verfahren nach einem der vorangehenden Ansprüche, **dadurch gekennzeichnet, dass** der Kunststoff der ersten Schicht in Bezug auf seine Schmelzviskosität ausgewählt worden ist.

12. Verfahren nach einem der vorangehenden Ansprüche, **dadurch gekennzeichnet, dass** in einem weiteren Schritt nach Schritt b) auf die Verbindungsoberfläche ein Haftmittel aufgebracht wird, insbesondere ein Schmelzkleber oder eine Funktionsschicht.

13. Verfahren nach Anspruch 12, **dadurch gekennzeichnet, dass** der Schmelzkleber ein Schmelzkleber auf Basis eines Polyamids, eines Polyethylens, eines amorphen Polyalphaolefins, eines Polyesterelastomers, eines thermoplastischen Polyurethans (TPU), eines reaktiven Polyurethans, eines Ethylenvinylacetat-Copolymers, oder eines Copolyamidelastomers ist.

14. Verfahren nach Anspruch 12, **dadurch gekennzeichnet, dass** die Funktionsschicht ein thermoplastisches Polymer, ein thermoplastisches Elastomer oder Mischungen davon, enthält, das vorzugsweise aus der Gruppe ausgewählt ist, die aus Acrylnitril-Butadien-Styrol-Copolymerisat, Polyvinylchlorid, Polymethylmethacrylat, Polyethylenterephthalat, thermoplastisches Polyurethan (TPU), Polypropylen und Polyethylen besteht.

15. Verfahren nach einem der vorangehenden Ansprüche, **dadurch gekennzeichnet, dass** die elektromagnetische Strahlung Laserstrahlung ist.

16. Kantenleiste erhältlich nach einem Verfahren gemäß einem der Ansprüche 1 bis 15.

17. Möbelteil umfassend eine Kantenleiste nach Anspruch 16.

18. Verwendung einer Kantenleiste nach Anspruch 16 zur Herstellung eines plattenförmigen Möbelteils.
